# EUROPÄISCHE PATENTSCHRIFT

(11) **EP 4 184 685 B1**
(45) Veröffentlichungstag und Bekanntmachung des Hinweises auf die Patenterteilung: **31.12.2025**
(21) Anmeldenummer: 22206525.2
(22) Anmeldetag: 10.11.2022
(51) Int. Cl.: H01M 50/242, H01M 50/204, H01M 50/249, H01M 50/502

(54) **ELEKTRISCHE ENERGIESPEICHERVORRICHTUNG FÜR EIN KRAFTFAHRZEUG**
ELECTRIC ENERGY STORAGE DEVICE FOR A MOTOR VEHICLE
DISPOSITIF DE STOCKAGE D'ÉNERGIE ÉLECTRIQUE POUR VÉHICULE AUTOMOBILE

(30) Priorität: 22.11.2021 DE 102021130477
(43) Veröffentlichungstag der Anmeldung: 24.05.2023
(73) Patentinhaber: MAN Truck & Bus SE, 80995 München (DE)
(72) Erfinder: Wick, Michael, 80995 München (DE); Wiemann, Robert, 80995 München (DE)
(74) Vertreter: v. Bezold & Partner Patentanwälte - PartG mbB

(56) Entgegenhaltungen:
- WO-A1-2021/130522
- CN-A- 109 742 278

## Beschreibung

Die Erfindung betrifft eine elektrische Energiespeichervorrichtung für ein elektrisch antreibbares Kraftfahrzeug, sowie ein elektrisch antreibbares Kraftfahrzeug mit der elektrischen Energiespeichervorrichtung.

Hybrid-, Plug-In-Hybrid-, Brennstoffzellen und Elektrofahrzeuge verfügen über eine Traktionsenergiespeichervorrichtung, welche zur Aufnahme bzw. Bereitstellung von Rekuperations- und Antriebsenergie dient. Traktionsenergiespeicher können auf Basis von Akkumulatoren, z. B. Li-lonen-Batterien, gebildet sein. Typischerweise sind derartige Traktionsenergiespeicher modular aufgebaut, wobei einzelne Energiespeicherzellen stapelartig angeordnet und elektrisch zu einzelnen Speichermodulen zusammengefasst sind, die wiederum innerhalb eines Gehäuses in Reihe und/oder parallel geschaltet sind.

In einem Crashlastfall, d. h. bei einer Kollision des Kraftfahrzeugs z. B. mit einem weiteren Fahrzeug, und den dadurch plötzlich auftretenden hohen Quer- und/oder Längsbeschleunigungen des Kraftfahrzeugs kann es zu Verformungen des Traktionsenergiespeichers innerhalb des Gehäuses kommen. Dabei kann insbesondere eine Durchbiegung der Speichermodule auftreten, d. h., zentral innerhalb der Speichermodule angeordnete Energiespeicherzellen verschieben sich innerhalb des Gehäuses besonders stark aus ihrer Normallage im jeweiligen Stapel der Energiespeicherzellen heraus. Dies kann zu Beschädigungen und Defekten der Traktionsenergiespeichervorrichtung führen, z. B. Beschädigungen an den Energiespeicherzellen und/oder elektrischen Verbindungen zwischen den Energiespeicherzellen bzw. Speichermodulen.

Die WO 2021/130522 A1 zeigt eine Trägervorrichtung, die eine Verstärkungsanordnung mit mindestens zwei benachbarten Verstärkungshohlabschnitten aufweist. Beide Verstärkungshohlabschnitte werden von der Seitenwand der Trägervorrichtung durchquert und bestehen jeweils aus einem inneren Verstärkungshohlabschnitt des inneren Verstärkungsteils und einem äußeren Verstärkungshohlabschnitt des äußeren Verstärkungsteils. Die beiden Verstärkungshohlabschnitte sind zumindest teilweise einander zugewandt. Ein longitudinaler Verstärkungsbefestigungsabschnitt zwischen den benachbarten Verstärkungshohlabschnitten ist an der Seitenwand befestigt und besteht aus einem inneren Verstärkungsbefestigungsabschnitt des inneren Verstärkungsteils und einem äußeren Verstärkungsbefestigungsabschnitt des äußeren Verstärkungsteils. Beide Verstärkungsbefestigungsabschnitte sind zumindest teilweise einander zugewandt.

Der Erfindung liegt somit die Aufgabe zu Grunde, eine verbesserte Energiespeichervorrichtung bereitzustellen, welche die Nachteile bekannter Ansätze zumindest teilweise vermeidet. Insbesondere besteht die Aufgabe darin, eine Energiespeichervorrichtung für ein elektrisch antreibbares Kraftfahrzeug bereitzustellen, die Verformungen der Speichermodule im Crashlastfall verhindert oder zumindest reduziert.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird eine elektrische Energiespeichervorrichtung, insbesondere eine Traktionsenergiespeichervorrichtung, für ein elektrisch antreibbares Kraftfahrzeug, insbesondere Nutzfahrzeug, bereitgestellt. Die elektrische Energiespeichervorrichtung umfasst einen Speicher für elektrische Energie (insbesondere ein Traktionsenergiespeicher), der, vorzugsweise vollständig, in einem Gehäuse (der elektrischen Energiespeichervorrichtung) angeordnet ist. Die elektrische Energiespeichervorrichtung umfasst das Gehäuse. Das Gehäuse kann als rahmenartige Struktur ausgeführt sein.

Die elektrische Energiespeichervorrichtung umfasst ferner eine Crashstruktur, die in einem Bereich zwischen einer Innenfläche einer Gehäuse-Seitenwand und dem Speicher angeordnet ist. Die Crashstruktur kann vorzugsweise einstückig ausgebildet sein oder einen einstückig ausgebildeten Grundkörper aufweisen. Der Speicher und die Crashstruktur sind zweckmäßig (vollständig) innerhalb des Gehäuses angeordnet. Eine der Gehäuse-Seitenwand zugewandte Seite der Crashstruktur weist eine Außenkontur (d. h. eine Flächenkontur, Oberflächenform einer Fläche der Seite) auf, die zumindest abschnittweise formangepasst (d. h. formkorrespondierend, gleiche oder ähnliche unebene Flächenkontur oder Oberflächenform aufweisend) zu einer unebenen Kontur der Gehäuse-Seitenwand (d. h. eine Flächenkontur, Oberflächenform der Innenfläche der Gehäuse-Seitenwand) ausgebildet ist. Die der Gehäuse-Seitenwand zugewandte Seite der Crashstruktur weist somit zumindest einen formangepassten Abschnitt auf, der formangepasst zu einem dem formangepassten Abschnitt gegenüberliegenden Abschnitt der Gehäuse-Seitenwand, der eine unebene Kontur aufweist, ausgebildet ist.

Die Crashstruktur ist derart ausgebildet, dass sie in einem Crashlastfall (d. h. bei einer Kollision des Kraftfahrzeugs mit einem Objekt, z. B. mit einem weiteren Kraftfahrzeug) mit dem zumindest einen formangepassten Abschnitt an dem Abschnitt der Gehäuse-Seitenwand anliegt. Vorzugsweise liegt die Crashstruktur (in einem montierten Zustand der Crashstruktur innerhalb des Gehäuses) mit dem zumindest einen formangepassten Abschnitt an dem Abschnitt der Gehäuse-Seitenwand an.

Ferner ist die Crashstruktur derart ausgebildet, dass der Speicher in einem Crashlastfall an der Crashstruktur anliegt. Vorzugsweise liegt der Speicher (in einem montierten Zustand der Crashstruktur und des Speichers innerhalb des Gehäuses) an der Crashstruktur an.

Zweckmäßig ist die Crashstruktur in einem Freiraum zwischen der Gehäuse-Seitenwand und dem Speicher angeordnet. Der Freiraum bietet üblicherweise (in bekannten Energiespeichervorrichtungen) dem Speicher die Möglichkeit, sich in einem Crashlastfall in den Freiraum hinein zu verformen.

Die Crashstruktur kann insbesondere ein festes, vorzugsweise hochfestes (d. h. hochsteifes), Material umfassen und/oder (einstückig) aus mindestens einem hochfesten Material bestehen. Ein hochfestes Material zeichnet sich insbesondere durch eine hohe Steifigkeit, Härte und/oder Biegefestigkeit aus. Die Crashstruktur kann ein plastisch verformbares und/oder elektrisch nicht leitfähiges Material, vorzugsweise ein, besonders bevorzugt kohlenstofffaserverstärktes und/oder glasfaserverstärktes, Kunststoff und/oder Thermoplast, umfassen. Das Material kann eine Flächendichte größer 1 kg/m² (1.10⁻⁹ t/mm²), z. B. 1,14 kg/m² (1,14.10⁻⁹ t/mm²), und/oder ein Elastizitätsmodul größer 1.10⁹ N/m²,_{'} z. B. 2.10⁹ N/m², aufweisen. Alternativ oder ergänzend kann die Crashstruktur ein Spritzgusselement sein. Alternativ zum Spritzgusselement kann die Crashstruktur durch additive Fertigung hergestellt sein.

Durch die vorliegende Offenbarung wird somit eine elektrische Energiespeichervorrichtung geschaffen, die Verformungen des Speichers für elektrische Energie in einem Crashlastfall mittels der vorgesehenen Crashstruktur verhindert oder zumindest reduziert. In einem solchen Crashlastfall liegt der Speicher an der Crashstruktur an, sodass der Speicher möglichst in seiner normalen Einbaulage gehalten werden kann. Mit anderen Worten, nimmt die Crashstruktur nunmehr den üblicherweise vorgesehenen Freiraum zwischen der Gehäuse-Seitenwand und dem Speicher ein, in die sich der Speicher bei bekannten elektrischen Energiespeichervorrichtungen hinein verformen kann.

Ferner berücksichtigt die vorliegende Offenbarung, dass das Gehäuse einer elektrischen Energiespeichervorrichtung nicht kastenförmig mit flachen Seitenwänden ausgebildet sein muss. Stattdessen können Gehäuse-Seitenwände aus strukturellen Gründen, z. B. angepasst an die Einbausituation innerhalb des Kraftfahrzeugs oder zur optimierten Anordnung von (Anbau- )Komponenten der elektrischen Energiespeichervorrichtung innerhalb und/oder am Gehäuse, uneben sein und z. B. Ausbuchtungen, Prägungen, Sicken usw. aufweisen. Dadurch, dass die Seite der Crashstruktur, die einer unebenen Kontur der Gehäuse-Seitenwand gegenüberliegt, formangepasst ausgebildet ist, kann die Gehäuse-Seitenwand im Crashlastfall an der Crashstruktur anliegen, wobei Verformungen der Gehäuse-Seitenwand verhindert oder zumindest reduziert werden können. Auf vorteilhafte Weise können so hohe Spannungskräfte (Scherkräfte) in der Gehäuse-Seitenwand und daraus resultierende Beschädigungen der Gehäuse-Seitenwand, z. B. Risse, vermieden oder zumindest reduziert werden.

Die bevorzugte hohe Steifigkeit der Crashstruktur dient dazu, dass sich die Crashstruktur im Crashlastfall nicht selbst verformt. Die Crashstruktur ist primär nicht dazu vorgesehen, Crashenergie in einem Crashlastfall aufzunehmen und abzubauen. Der (im Crashlastfall) an der Crashstruktur anliegende Speicher wird so möglichst in seiner normalen Einbaulage gehalten und Verformungen des Speichers im Crashlastfall verhindert oder zumindest reduziert. Gleichzeitig kann die Crashstruktur derart ausgebildet sind, dass der Speicher bei einer Verformung des Gehäuses im Crashlastfall gerade, d. h., in seiner normalen Einbaulage gehalten wird. Die Steifigkeit der Crashstruktur ist durch die geeignete Wahl des Materials in Abhängigkeit von dem Einsatzfall und dem Abstützbedarf, z. B. die Größe und das Gewicht des Speichers, einstellbar. Mit anderen Worten, über eine geeignete Wahl der Steifigkeit der Crashstruktur kann ein Abfangen der Verformung des Speichers im Crashlastfall stattfinden.

Gemäß einer besonders bevorzugten Ausführungsform kann die Crashstruktur eine, vorzugsweise im Wesentlichen plane, dem Speicher zugewandte Stützfläche zur Abstützung des Speichers aufspannen (d. h., die Stützfläche kann an der Crashstruktur ausgebildet sein). Eine der Gehäuse-Seitenwand abgewandte Seite der Crashstruktur (d. h. eine Seite der Crashstruktur, welcher der Gehäuse-Seitenwand zugewandten Seite der Crashstruktur gegenüberliegt) kann die Stützfläche aufweisen. Die Stützfläche kann derart ausgebildet sein, dass sich der Speicher auf der gesamten Stützfläche abstützt (d. h., die gesamte Stützfläche mit dem Speicher in Berührung steht). Die aufgespannte Stützfläche bietet dem Speicher somit auf vorteilhafte Weise die Möglichkeit, sich an der Stützfläche der Crashstruktur abstützen, wodurch Verformungen des Speichers in einem Crashlastfall verhindert oder zumindest reduziert werden können. Eine plane Stützfläche bietet ferner den Vorteil, dass sich der Speicher mit seiner üblicherweise im Wesentlich planen Seitenfläche einheitlich (gleichmäßig) an der Stützfläche abstützen kann.

Gemäß einer weiteren bevorzugten Ausführungsform kann der Speicher ein elektrisches Speichermodul aus einer Mehrzahl stapelartig angeordneter Speicherzellen umfassen. Eine in Stapelrichtung der Speicherzellen erstreckende Seitenfläche des elektrischen Speichermoduls kann an der Stützfläche anliegen. Diese Anordnung ist besonders vorteilhaft, um die Verformung des Speichers zu vermeiden oder zumindest zu reduzieren, da die Verformung insbesondere durch Verschiebungen von Speicherzellen aus ihrer Normallage innerhalb des Stapels hervorgerufen wird. Diese Verschiebungen werden durch die Crashstruktur verhindert.

Gemäß einer weiteren Ausführungsvariante kann sich lediglich ein Teil der Speicherzellen an der Stützfläche abstützen. Alternativ oder ergänzend kann (lediglich) ein zentraler Bereich der Seitenfläche des elektrischen Speichermoduls (in Stapelrichtung der Speicherzellen gesehen) an der Stützfläche anliegen. So wurde festgestellt, dass die Verformung insbesondere als Durchbiegung des Speichers auftreten kann, d. h., ein Mittelteil des Speichers verschiebt sich im Crashlastfall besonders stark aus seiner Normallage. Ein Grund dafür kann z. B. sein, dass das Speichermodul an den Deckflächen des Speicherzellen-Stapels im Gehäuse gehaltert ist. Die Durchbiegung erfolgt insbesondere dann, wenn der Speicher stapelartig angeordnete Speicherzellen umfasst, da sich insbesondere zentral innerhalb des Speichermoduls angeordnete Speicherzellen besonders stark aus ihrer Normallage im jeweiligen Stapel der Speicherzellen herausverschieben. Daher kann es ausreichend sein, dass sich lediglich ein Teil der Speicherzellen bzw. lediglich ein zentraler Bereich der Seitenfläche des elektrischen Speichermoduls an der Stützfläche anliegt. Mit anderen Worten, die Größe, Form und Position der Crashstruktur kann auf vorteilhafte Weise in Abhängigkeit von dem Einsatzfall und dem Abstützbedarf, z. B. die Größe und das Gewicht des Speichers, optimiert werden, wodurch z. B. Material und damit Herstellungskosten sowie Gewicht der Crashstruktur eingespart werden können. Es ist somit nicht notwendig, dass die Crashstruktur im Wesentlichen den gesamten Bereich zwischen der Innenfläche der Gehäuse-Seitenwand und dem Speicher auszufüllt. Stattdessen können ferner vorteilhaft Bereiche zwischen der Innenfläche der Gehäuse-Seitenwand und dem Speicher, in die sich der Speicher in einem Crashlastfall nicht hinein verformt, für andere Zwecke freigehalten werden.

Die Stützfläche kann vorzugsweise in Bezug zu einer Mittellinie (spiegel-)symmetrisch ausgebildet sein. Die Stützfläche kann z. B. einen mittleren Bereich und zwei äußere (spiegelsymmetrisch zueinander ausgebildete) Außenbereiche aufweisen, wobei der mittlere Bereich eine konstante Breite in Längsrichtung der Stützfläche und die Außenbereiche eine in Längsrichtung nach außen hin verringernde Breite aufweisen. Alternativ kann die Stützfläche z. B. rechteckig ausgebildet sein. Eine Längsrichtung der Stützfläche (und/oder der Crashstruktur) kann vorzugsweise im Wesentlichen parallel zur Stapelrichtung der Speicherzellen ausgerichtet sein. Ein Verhältnis einer Länge der Stützfläche zu einer Breite der Stützfläche kann 5:1 oder größer sein. Die Stützfläche kann zu allen Seiten vom Gehäuse beabstandet angeordnet sein.

Gemäß einer besonderen Ausführungsform kann die Crashstruktur eine oder mehrere Halterungen für elektrische Verbindungen aufweisen, vorzugsweise eine Halterung für einen elektrischen Stecker, eine Kabelführung und/oder eine Kabeldurchführung. Eine oder mehrere der Halterungen können an einer Seite der Crashstruktur, die einer als (abnehmbaren) Deckel ausgebildeten Seitenwand des Gehäuses zugewandt ist, ausgebildet sein. Somit kann die Crashstruktur eine weitere technische Funktion ausüben, wodurch z. B. die Anzahl separater Halterungen für elektrische Verbindungen innerhalb des Gehäuses reduziert werden kann. Die Anordnung von Halterungen an einer dem Gehäuse-Deckel zugewandten Seite der Crashstruktur führt zu einem einfacheren Verlegen und Anbringen der elektrischen Verbindungen (z. B. Verkabelungen des Speichers), wenn die Crashstruktur bereits im Gehäuse befestigt ist.

Gemäß einer weiteren Ausführungsform kann eine Schützbox an einer Außenfläche der Gehäuse-Seitenwand angeordnet sein und mindestens eine elektrische Verbindung (z. B. eine Niedervolt- und/oder Hochvolt-Verbindung) zwischen dem Speicher und der Schützbox an der Crashstruktur gehaltert und durch die Gehäuse-Seitenwand hindurchgeführt sein. Die mindestens eine elektrische Verbindung kann einen elektrischen Stecker, der zur Steckverbindung mit der Schützbox an der der Gehäuse-Seitenwand zugewandten Seite der Crashstruktur gehaltert ist, umfassen. Die Schützbox ist eine Vorrichtung, die Trennelemente und Absicherungen umfasst, um einen spannungsführenden Teil des Speichers von einem (Hochvolt-)Bordnetz des Kraftfahrzeugs wahlweise zu trennen und zuzuschalten. Die Crashstruktur kann somit an der gleichen Gehäuse-Seitenwand wie die Schützbox angeordnet sein und vorteilhaft die zusätzliche technische Funktion übernehmen, elektrische Verbindungen zwischen dem Speicher und der Schützbox zu haltern.

Gemäß einer weiteren Ausführungsform kann die Crashstruktur zumindest abschnittweise eine Rippenstruktur mit Rippen, die zu einer Seite der Crashstruktur hin offene Kammern ausbilden, aufweisen. Durch die Rippenstruktur kann z. B. Material und Gewicht der Crashstruktur eingespart werden, wobei weiterhin die erforderliche Stabilität der Crashstruktur gewährleistet wird.

Gemäß einer weiteren besonderen Ausführungsform kann die Crashstruktur mittels einer lösbaren Verbindung, die vorzugsweise in einem montierten Zustand der elektrischen Energiespeichervorrichtung (d. h. in einem Zustand, in dem die Crashstruktur und des Speichers innerhalb des Gehäuses montiert sind) zugänglich angeordnet ist, mit dem Gehäuse, vorzugsweise der Gehäuse-Seitenwand, verbunden sein. Aufgrund der lösbaren Verbindung kann die Crashstruktur z. B. jederzeit bedarfsweise ausgetauscht werden, insbesondere dann, wenn der Speicher bereits im Gehäuse eingesetzt ist.

Gemäß einer weiteren Ausführungsform kann die Crashstruktur mindestens ein als Hülse ausgebildetes, vorstehendes Stützelement aufweisen, durch das eine, vorzugsweise verliersicher und/oder versenkt, in die Crashstruktur eingebrachte Schraube (oder ein Schraubbolzen) der lösbaren Verbindung hindurchgeführt und in einer im Gehäuse ausgebildeten Schraubbutze verschraubt ist. Eine mindestens eine Versenkung der Crashstruktur, in die jeweils eine der mindestens einen Schraube eingebracht ist, kann in einer Seite der Crashstruktur, die einer als (abnehmbaren) Deckel ausgebildeten Seitenwand des Gehäuses zugewandt ist, ausgebildet sein. Dieses mindestens eine Stützelement dient vorteilhafterweise u. a. als Positionierungshilfe der Crashstruktur, mit der eine Beanstandung zu einer der Gehäuse-Seitenflächen einstellbar ist und so die Crashstruktur z. B. an einem zentralen (mittleren) Bereich des Speichers anliegend positioniert werden kann. Ferner kann die Crashstruktur besser bzw. einfacher an der unebenen Gehäuse-Seitenwand angebracht werden. Die Anordnung und Zugänglichkeit der Versenkungen an einer dem Gehäuse-Deckel zugewandten Seite der Crashstruktur führt zu einer (besseren) Zugänglichkeit der Schrauben in einem montierten Zustand der elektrischen Energiespeichervorrichtung, sodass die Crashstruktur z. B. ausgetauscht werden kann, wenn der Speicher im Gehäuse angeordnet ist.

Gemäß einer weiteren Ausführungsvariante kann die lösbare Verbindung mindestens eine Klemmverbindung umfassen, die vorzugsweise an einer gleichen und/oder gegenüberliegenden Seite der Crashstruktur wie das mindestens eine Stützelement ausgebildet ist.

Gemäß einer weiteren Ausführungsform kann die Crashstruktur in einem Nicht-Crashfall lediglich mit einem formangepasst ausgebildeten Abschnitt, mit dem mindestens einen Stützelement und/oder mit der lösbaren Verbindung am Gehäuse anliegen. Es ist somit ausreichend, wenn die Crashstruktur nur an wenigen und/oder im Crashlastfall kritischen Stellen mit dem Gehäuse in Kontakt steht. Die Crashstruktur muss den Bereich zwischen der Innenfläche der Gehäuse-Seitenwand und dem Speicher nicht vollständig ausfüllen, sodass Material und Gewicht der Crashstruktur eingespart werden kann.

Gemäß einer weiteren Ausführungsvariante kann die Crashstruktur eine elastische Hülle, vorzugsweise ein Luftpolster, umfassen. Die elastische Hülle ermöglicht einen zusätzlichen Schutz im Crashlastfall.

Gemäß einer weiteren besonderen Ausführungsform kann die elektrische Energiespeichervorrichtung ferner eine zweite Crashstruktur, die in einem Bereich zwischen einer der Innenfläche der Gehäuse-Seitenwand gegenüberliegenden Innenfläche einer zweiten Gehäuse-Seitenwand und dem Speicher angeordnet ist und Merkmale der Crashstruktur wie hierin offenbart aufweist, umfassen, vorzugsweise wobei der Speicher zwischen der Crashstruktur und der zweiten Crashstruktur eingespannt ist. Es ist ferner vorstellbar, mehr als zwei Crashstrukturen vorzusehen, die jeweils in einem Bereich zwischen einer der Gehäuse-Seitenwände und dem Speicher angeordnet sind. Durch diese Anordnung wird eine Durchbiegung des Speichers in mehrere Richtungen vermieden oder zumindest reduziert. Ein Einspannen des Speichers zwischen der Crashstruktur und der zweiten Crashstruktur führt vorteilhafterweise zu einer festen Anordnung des Speichers nicht nur im Crashlastfall, sondern auch in der normalen Einbausituation des Speichers innerhalb des Gehäuses.

Die zweite Crashstruktur kann Merkmale der Crashstruktur wie hierin offenbart aufweisen. Insbesondere kann eine der zweiten Gehäuse-Seitenwand zugewandte Seite der zweiten Crashstruktur eine Außenkontur aufweisen, die zumindest abschnittweise formangepasst zu einer unebenen Kontur der zweiten Gehäuse-Seitenwand ausgebildet ist. Die der zweiten Gehäuse-Seitenwand zugewandte Seite der zweiten Crashstruktur weist somit zumindest einen formangepassten Abschnitt auf, der formangepasst zu einem dem formangepassten Abschnitt gegenüberliegenden Abschnitt der zweiten Gehäuse-Seitenwand, der eine unebene Kontur aufweist, ausgebildet ist. Ferner kann die zweite Crashstruktur eine, vorzugsweise im Wesentlichen plane, dem Speicher zugewandte Stützfläche zur Abstützung des Speichers aufspannen. Eine der zweiten Gehäuse-Seitenwand abgewandte Seite der zweiten Crashstruktur kann die Stützfläche aufweisen.

Gemäß einer weiteren Ausführungsvariante kann der Speicher mehrere nebeneinander angeordnete elektrische Speichermodule mit einem ersten elektrischen Speichermodul, das sich an der Crashstruktur abstützt, und einem zweiten elektrischen Speichermodul, das sich an der zweiten Crashstruktur abstützt, umfassen. Das erste elektrische Speichermodul kann dem elektrischen Speichermodul wie hierin offenbart entsprechen. Das zweite elektrische Speichermodul kann Merkmale des elektrischen Speichermodul wie hierin offenbart aufweisen. Insbesondere kann das zweite elektrisches Speichermodul aus einer Mehrzahl stapelartig angeordneter Speicherzellen bestehen. Ferner kann eine in Stapelrichtung der Speicherzellen erstreckende Seitenfläche des zweiten elektrischen Speichermoduls an einer Stützfläche der zweiten Crashstruktur anliegen. Die Stapelrichtung der Speicherzellen des elektrischen Speichermoduls ist vorzugsweise parallel zur Stapelrichtung der Speicherzellen des zweiten elektrischen Speichermoduls. Durch diese Anordnung wird die Verformung des Speichers vermieden oder zumindest reduziert, welche insbesondere durch Verschiebungen von Speicherzellen aus ihrer Normallage innerhalb des Stapels hervorgerufen wird. Diese Verschiebungen der Speicherzellen des ersten und zweiten Speichermoduls werden entsprechend durch die Crashstruktur bzw. der zweiten Crashstruktur verhindert.

Gemäß einem weiteren allgemeinen Aspekt der Erfindung wird ein elektrisch antreibbares Kraftfahrzeug, vorzugsweise ein Nutzfahrzeug, mit einer elektrischen Energiespeichervorrichtung wie hierin offenbart bereitgestellt.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer elektrischen Energiespeichervorrichtung gemäß einer Ausführungsform;
- Figur 2: eine Frontansicht einer Crashstruktur gemäß einer Ausführungsform;
- Figur 3: eine isometrische Frontansicht (a) und Rückansicht (b) der Crashstruktur aus Figur 2 und eine isometrische Frontansicht (c) der Crashstruktur aus Figur 2 mit gehalterten elektrischen Verbindungen;
- Figur 4: eine isometrische Frontansicht der Crashstruktur aus Figur 2 mit verschiedenen gehalterten elektrischen Verbindungen; und
- Figur 5: eine isometrische Frontansicht der Crashstruktur gemäß einer weiteren Ausführungsform im befestigten Zustand.

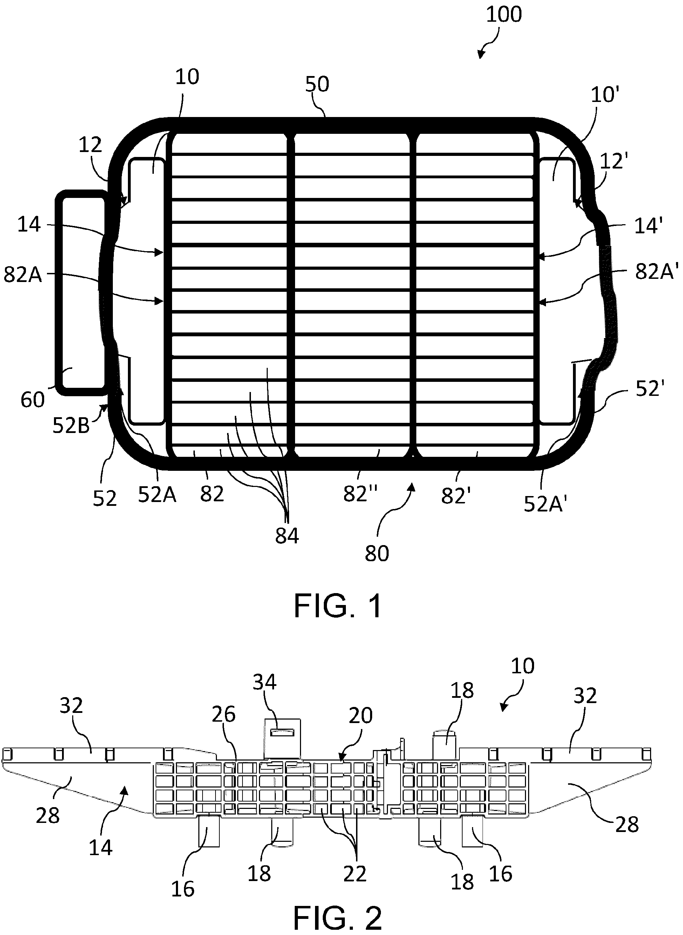

Figur 1 zeigt schematisch eine elektrische Energiespeichervorrichtung 100 für ein elektrisch antreibbares Kraftfahrzeug, insbesondere ein Nutzfahrzeug. Die elektrische Energiespeichervorrichtung 100 umfasst einen Speicher 80 für elektrische Energie, ein Gehäuse 50 und eine Crashstruktur 10. Der Speicher 80 ist in dem Gehäuse 50 angeordnet.

Die Crashstruktur 10 ist in einem Bereich zwischen einer Innenfläche 52A einer Gehäuse-Seitenwand 52 und dem Speicher 80 angeordnet. Ferner kann eine Schützbox 60 an einer Außenfläche 52B der Gehäuse-Seitenwand 52 angeordnet sein.

Das Gehäuse 50 zeichnet sich dadurch aus, dass die Gehäuse-Seitenwand 52 eine zumindest abschnittsweise unebene Kontur aufweist. Korrespondierend dazu weist eine der Gehäuse-Seitenwand 52 zugewandten Seite 12 der Crashstruktur 10 eine Außenkontur auf, die zumindest abschnittweise formangepasst zu der unebenen Kontur der Gehäuse-Seitenwand 52 ausgebildet ist.

Die der Seite 12 gegenüberliegende Seite der Crashstruktur 10 ist in dem Speicher 80 zugewandt und als Stützfläche 14 zur Abstützung des Speichers 80 ausgebildet. Die Stützfläche 14 ist vorzugsweise im Wesentlichen plan.

Die Crashstruktur 10 kann ein plastisch verformbares und/oder elektrisch nicht leitfähiges Material umfassen. Vorzugsweise kann die Crashstruktur 10 ein, z. B. kohlenstofffaserverstärktes und/oder glasfaserverstärktes, Kunststoff, umfassen. Alternativ oder ergänzend kann die Crashstruktur 10 ein Spritzgusselement sein. Ferner kann die Crashstruktur 10 eine elastische Hülle, z. B. ein Luftpolster, umfassen.

Der Speicher 80 kann zumindest ein elektrisches Speichermodul 82 aus einer Mehrzahl stapelartig angeordneter Speicherzellen 84 umfassen. Das elektrische Speichermodul 82 kann insbesondere derart zur Crashstruktur 10 angeordnet sein, dass eine in Stapelrichtung der Speicherzellen 84 erstreckende Seitenfläche 82A des elektrischen Speichermoduls 82 an der Stützfläche 14 anliegt. Dadurch können Verschiebungen einzelner Speicherzellen 84, durch die Anlage an der Stützfläche 1 der Crashstruktur 10 verhindert werden.

Da solche Verschiebungen in bekannten elektrischen Energiespeichervorrichtungen insbesondere bei zentral innerhalb des Stapels angeordneter Speicherzellen 84 auftreten, kann es ausreichend sein, dass sich lediglich ein Teil der Speicherzellen 84 an der Stützfläche 14 abstützt und/oder ein zentraler Bereich der Seitenfläche 82A des elektrischen Speichermoduls 82 an der Stützfläche 14 anliegt.

Wie in Figur 1 gezeigt ist, kann die elektrische Energiespeichervorrichtung 100 ferner eine zweite Crashstruktur 10' umfassen, die in einem Bereich zwischen einer der Innenfläche 52A der Gehäuse-Seitenwand 52 gegenüberliegenden Innenfläche 52A' einer zweiten Gehäuse-Seitenwand 52' und dem Speicher 80 angeordnet ist.

Ähnlich wie die Crashstruktur 10 kann die zweite Crashstruktur 10' eine der Gehäuse-Seitenwand 52 zugewandten Seite 12' mit einer Außenkontur aufweisen, die zumindest abschnittweise formangepasst zu einer unebenen Kontur der Gehäuse-Seitenwand 52' ausgebildet ist. Ferner kann die zweite Crashstruktur 10' eine, vorzugsweise im Wesentlichen plane, dem Speicher 80 zugewandte Stützfläche 14' zur Abstützung des Speichers aufspannen.

Der Speicher 80 kann mehrere nebeneinander angeordnete elektrische Speichermodule 82, 82', 82" mit dem elektrischen Speichermodul 82, das sich an der Crashstruktur 10 abstützt, und einem zweiten elektrischen Speichermodul 82', das sich an der zweiten Crashstruktur 10' abstützt, umfassen. Weitere elektrische Speichermodule, wie ein drittes elektrisches Speichermodul 82", können zwischen dem elektrischen Speichermodul 82 und dem zweiten elektrischen Speichermodul 82' angeordnet sein.

Eine Ausführungsform der Crashstruktur 10 ist in verschiedenen Ansichten in den Figuren 2 bis 4 gezeigt.

Die Stützfläche 14 ist vorzugsweise in Bezug zu einer Mittellinie spiegelsymmetrisch ausgebildet. In der gezeigten Ausführungsform umfasst die Stützfläche 14 einen mittleren Bereich 26 und zwei äußere, spiegelsymmetrisch zueinander ausgebildete Außenbereiche 28. Der mittlere Bereich 26 weist eine konstante Breite in Längsrichtung auf. Die Außenbereiche 28 weisen sich eine in Längsrichtung nach außen hin verringernde Breite auf.

Die Crashstruktur 10 kann zumindest abschnittweise eine Rippenstruktur 20 mit Rippen, die zu einer Seite der Crashstruktur 10 hin offene Kammern 22 ausbilden, aufweisen. Die Rippenstruktur 20 kann insbesondere im mittleren Bereich 26 ausgebildet sein.

Die Crashstruktur 10 kann eine oder mehrere Halterungen 32, 34, 36, 38 für elektrische Verbindungen aufweisen.

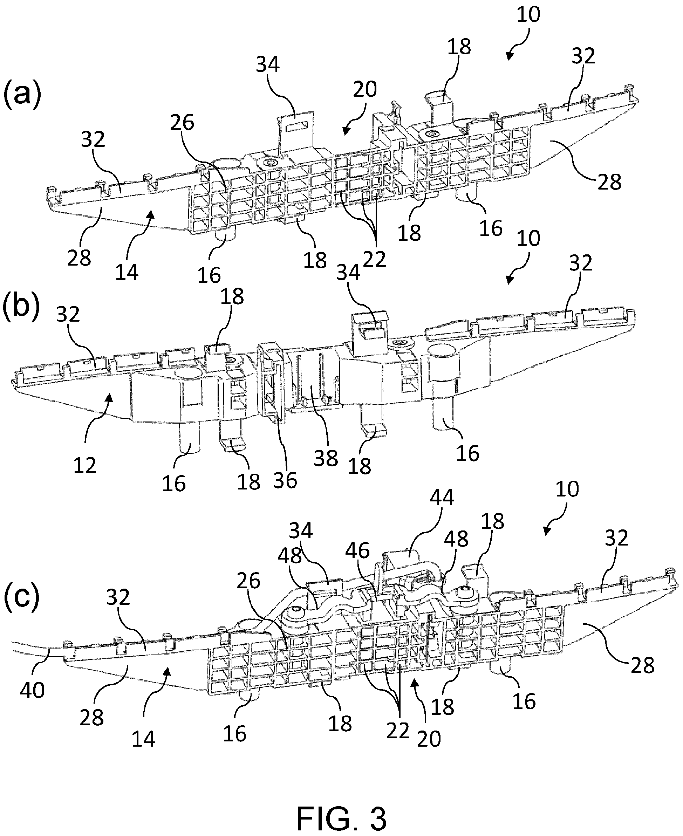

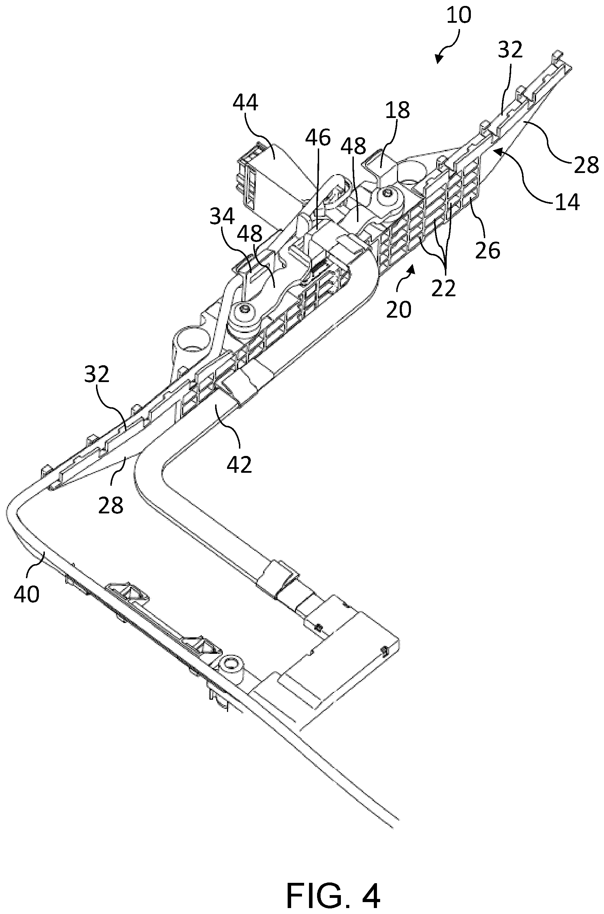

So können Halterungen 32, 34, z. B. Kabelführungen, an bzw. entlang einer Oberseite der Crashstruktur 10 ausgebildet sein. Diese Halterungen 32, 34 können z. B. elektrische Kabel 40 des Speichers 80 an der Crashstruktur 10 haltern, wie in den Figuren 3(c) und 4 gezeigt ist.

Ferner können weitere Halterungen 36, 38 an der Seite 12 der Crashstruktur 10 ausgebildet sein, die in Figur 3(b) gezeigt sind. Die Halterung 38 kann z. B. zur Aufnahme eines Moduls 46 zur Halterung und zum elektrischen Anschluss einer Stromschiene 42 des Speichers 80 ausgebildet sein, wie in Figur 4 gezeigt ist. Zur Befestigung der Stromschiene 42 kann das Modul 46 flexible Klammern 48 umfassen, die z. B. jeweils einseitig mit der Crashstruktur 10 verbunden, z. B. verschraubt, werden können.

Die Halterung 36 kann zur Halterung eines elektrischen Steckers 44 ausgebildet sein. Der Stecker 44, welcher in den Figuren 3(c) und 4 gezeigt ist, kann zur Steckverbindung und damit zur elektrischen Kontaktierung mit der Schützbox 60 vorgesehen sein. Der Stecker 44 kann zur Herstellung der elektrischen Kontaktierung durch die Gehäuse-Seitenwand 52 hindurchgeführt sein.

Der Stecker 44 kann über das Modul 46 mit der Stromschiene 42 elektrisch verbunden sein und damit eine elektrische Verbindung, z. B. eine Hochvolt-Verbindung, zwischen dem Speicher 80 und der Schützbox 60 herstellen. Zusätzlich kann der Stecker 44 mit den Kabel 40 elektrisch verbunden sein und damit eine weitere elektrische Verbindung, z. B. eine Niedervolt-Verbindung, zwischen dem Speicher 80 und der Schützbox 60 herstellen.

Die Crashstruktur 10 kann ferner eine oder mehrere als Hülsen ausgebildete, vorstehende Stützelemente 16 und eine oder mehrere Klemmverbindungen 18 umfassen. Die Klemmverbindungen 18, die vorzugsweise an einer gleichen und/oder gegenüberliegenden Seite der Crashstruktur 10 die Stützelemente 16 ausgebildet sind, dienen zur lösbaren Verbindung der Crashstruktur 10 an der Gehäuse-Seitenwand 52.

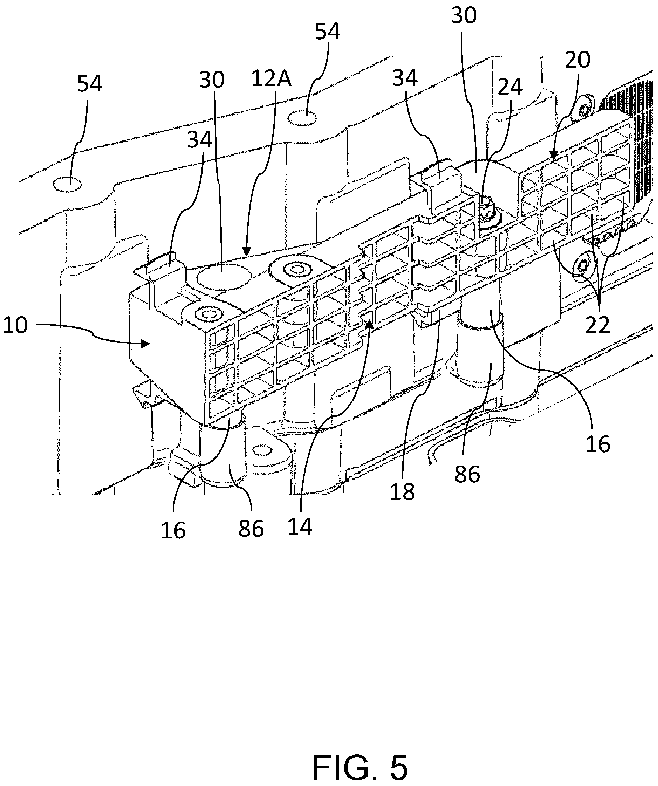

Figur 5 zeigt eine weitere Ausführungsform der Crashstruktur 10 in einem am Gehäuse 52 befestigten Zustand. Diese Crashstruktur 10 unterscheidet sich von der Ausführungsform der Figuren 2 bis 4 u. a. durch seine Form. In Figur 5 ist die Stützfläche 14 der Crashstruktur 10 rechteckig ausgebildet und weist ganzflächig die Rippenstruktur 20 mit den Kammern 22 auf.

Die Crashstruktur 10 ist mittels einer lösbaren Verbindung an der Gehäuse-Seitenwand 52 angebracht. Die lösbare Verbindung kann, zusätzlich oder alternativ zu den Klemmverbindungen 18, eine Schraubverbindung umfassen. Dazu kann jeweils eine, vorzugsweise verliersicher und/oder versenkt, in die Crashstruktur 10 eingebrachte Schraube 24 der Schraubverbindung durch eine der Stützelemente 16 hindurchgeführt und in einer im Gehäuse 50, vorzugsweise in der Gehäuse-Seitenwand 52, ausgebildeten Schraubbutze 86 verschraubt sein.

Die Schraubverbindung kann in einem montierten Zustand der elektrischen Energiespeichervorrichtung 100 zugänglich angeordnet sein. So können die Schrauben 24 in den jeweiligen Versenkungen 30 der Crashstruktur 10 eingebracht sein, wobei die Versenkungen 30 an einer Seite der Crashstruktur 10, die einer mittels eines Deckels lösbar verschließbaren Seite des Gehäuses 50 zugewandt ist, zugänglich sind. Nach Abnahme des Deckels, der z. B. über Schrauböffnungen 54 mit dem Gehäuse 50 verschraubt werden kann, können die Schrauben 24 händisch mit entsprechendem Werkzeug in den Versenkungen gelöst bzw. verschraubt werden. So kann die Crashstruktur z. B. eingesetzt oder herausgenommen werden, wenn der Speicher 80 bereits im Gehäuse eingesetzt ist.

Des Weiteren ist in Figur 5 zu sehen, dass die Seite 12 der Crashstruktur 10 einen Abschnitt 12A aufweist, der formangepasst zur zu der unebenen Kontur der Gehäuse-Seitenwand 52 ausgebildet ist. In einem Nicht-Crashfall kann die Crashstruktur 10 entsprechend so ausgebildet sein, dass sie lediglich mit dem Abschnitt 12A, mit den Stützelementen 16 und/oder mit der lösbaren Verbindung, d.h. den durch die Stützelemente 16 hindurchgeführte Schrauben 24 und/oder den Klemmverbindungen 18, am Gehäuse 50 anliegt.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

### Bezugszeichenliste

- 10, 10': Crashstruktur
- 12: Seite der Crashstruktur
- 12A: Abschnitt der Seite
- 14: Stützfläche
- 16: Stützelement
- 18: Klemmverbindung
- 20: Rippenstruktur
- 22: Durch Rippenstruktur gebildete Kammer
- 24: Schraube
- 26: Mittlerer Bereich der Stützfläche
- 28: Außenbereich der Stützfläche
- 30: Versenkung für Schraube
- 32, 34, 36, 38: Halterung
- 40: Kabel
- 42: Stromschiene
- 44: Elektrischer Stecker
- 46: Modul zur Halterung und zum elektrischen Anschluss
- 48: Klammer
- 50: Gehäuse
- 52, 52': Gehäuse-Seitenwand
- 52A, 52A': Innenfläche der Gehäuse-Seitenwand
- 52B: Außenfläche der Gehäuse-Seitenwand
- 54: Schrauböffnung für Gehäusedeckel
- 60: Schützbox
- 80: Speicher für elektrische Energie
- 82, 82', 82": Elektrisches Speichermodul
- 82A: Seitenfläche des elektrischen Speichermoduls
- 84: Speicherzelle
- 86: Schraubbutze
- 100: Elektrische Energiespeichervorrichtung

## Patentansprüche

1. Elektrische Energiespeichervorrichtung (100) für ein elektrisch antreibbares Kraftfahrzeug, insbesondere Nutzfahrzeug, umfassend:
einen Speicher (80) für elektrische Energie, der in einem Gehäuse (50) angeordnet ist; und
eine Crashstruktur (10), die in einem Bereich zwischen einer Innenfläche (52A) einer Gehäuse-Seitenwand (52) und dem Speicher (80) angeordnet ist,
wobei eine der Gehäuse-Seitenwand (52) zugewandte Seite (12) der Crashstruktur (10) eine Außenkontur aufweist, die zumindest abschnittweise formangepasst zu einer unebenen Kontur der Gehäuse-Seitenwand (52) ausgebildet ist, und
wobei die Crashstruktur (10) mittels einer lösbaren Verbindung, die vorzugsweise in einem montierten Zustand der elektrischen Energiespeichervorrichtung (100) zugänglich angeordnet ist, mit dem Gehäuse (50), vorzugsweise der Gehäuse-Seitenwand (52), verbunden ist.

2. Elektrische Energiespeichervorrichtung (100) nach Anspruch 1, wobei die Crashstruktur (10) eine, vorzugsweise im Wesentlichen plane, dem Speicher (80) zugewandte Stützfläche (14) zur Abstützung des Speichers (80) aufspannt.

3. Elektrische Energiespeichervorrichtung (100) nach Anspruch 2, wobei der Speicher (80) ein elektrisches Speichermodul (82) aus einer Mehrzahl stapelartig angeordneter Speicherzellen (84) umfasst, und eine in Stapelrichtung der Speicherzellen (84) erstreckende Seitenfläche (82A) des elektrischen Speichermoduls (82) an der Stützfläche (14) anliegt.

4. Elektrische Energiespeichervorrichtung (100) nach Anspruch 3, wobei sich lediglich ein Teil der Speicherzellen (84) an der Stützfläche (14) abstützt und/oder ein zentraler Bereich der Seitenfläche (82A) des elektrischen Speichermoduls (82) an der Stützfläche (14) anliegt.

5. Elektrische Energiespeichervorrichtung (100) nach einem der vorhergehenden Ansprüche, wobei die Crashstruktur (10) eine oder mehrere Halterungen (32, 34, 36, 38) für elektrische Verbindungen (40, 42, 44, 46) aufweist, vorzugsweise eine Halterung für einen elektrischen Stecker, eine Kabelführung und/oder eine Kabeldurchführung.

6. Elektrische Energiespeichervorrichtung (100) nach Anspruch 5, wobei eine Schützbox (60) an einer Außenfläche (52B) der Gehäuse-Seitenwand (52) angeordnet ist und mindestens eine elektrische Verbindung (40, 42, 44, 46) zwischen dem Speicher (80) und der Schützbox (60) an der Crashstruktur (10) gehaltert und durch die Gehäuse-Seitenwand (52) hindurchgeführt ist, wobei vorzugsweise die mindestens eine elektrische Verbindung (40, 42, 44, 46) einen elektrischen Stecker (44), der zur Steckverbindung mit der Schützbox (60) an der der Gehäuse-Seitenwand (52) zugewandten Seite (12) der Crashstruktur (10) gehaltert ist, umfasst.

7. Elektrische Energiespeichervorrichtung (100) nach einem der vorhergehenden Ansprüche, wobei die Crashstruktur (10) zumindest abschnittweise eine Rippenstruktur (20) mit Rippen, die zu einer Seite der Crashstruktur (10) hin offene Kammern (22) ausbilden, aufweist.

8. Elektrische Energiespeichervorrichtung (100) nach einem der vorhergehenden Ansprüche, wobei die Crashstruktur (10) ein plastisch verformbares und/oder elektrisch nicht leitfähiges Material, vorzugsweise ein, besonders bevorzugt kohlenstofffaserverstärktes und/oder glasfaserverstärktes, Kunststoff, umfasst und/oder ein Spritzgusselement ist.

9. Elektrische Energiespeichervorrichtung (100) nach einem der vorhergehenden Ansprüche, wobei die Crashstruktur (10) mindestens ein als Hülse ausgebildetes, vorstehendes Stützelement (16) aufweist, durch das eine, vorzugsweise verliersicher und/oder versenkt, in die Crashstruktur (10) eingebrachte Schraube (24) der lösbaren Verbindung hindurchgeführt und in einer im Gehäuse (50) ausgebildeten Schraubbutze (86) verschraubt ist.

10. Elektrische Energiespeichervorrichtung (100) nach Anspruch 9, wobei die lösbare Verbindung mindestens eine Klemmverbindung (18) umfasst, die vorzugsweise an einer gleichen und/oder gegenüberliegenden Seite der Crashstruktur (10) wie das mindestens eine Stützelement (16) ausgebildet ist.

11. Elektrische Energiespeichervorrichtung (100) nach einem der vorhergehenden Ansprüche, wobei die Crashstruktur (10) in einem Nicht-Crashfall lediglich mit einem formangepasst ausgebildeten Abschnitt (12A), mit dem mindestens einen Stützelement (16) und/oder mit der lösbaren Verbindung am Gehäuse (50) anliegt.

12. Elektrische Energiespeichervorrichtung (100) nach einem der vorhergehenden Ansprüche, wobei die Crashstruktur (10) eine elastische Hülle, vorzugsweise ein Luftpolster, umfasst.

13. Elektrische Energiespeichervorrichtung (100) nach einem der vorhergehenden Ansprüche, ferner umfassend eine zweite Crashstruktur (10'), die in einem Bereich zwischen einer der Innenfläche (52A) der Gehäuse-Seitenwand (52) gegenüberliegenden Innenfläche (52A') einer zweiten Gehäuse-Seitenwand (52') und dem Speicher (80) angeordnet ist und die Merkmale der Crashstruktur (10) nach einem der vorhergehenden Ansprüche aufweist, vorzugsweise wobei der Speicher (80) zwischen der Crashstruktur (10) und der zweiten Crashstruktur (10') eingespannt ist.

14. Elektrische Energiespeichervorrichtung (100) nach Anspruch 13, wobei der Speicher (80) mehrere nebeneinander angeordnete elektrische Speichermodule (82, 82', 82") mit einem ersten elektrischen Speichermodul (82), das sich an der Crashstruktur (10) abstützt, und einem zweiten elektrischen Speichermodul (82'), das sich an der zweiten Crashstruktur (10') abstützt, umfasst.

15. Elektrisch antreibbares Kraftfahrzeug, insbesondere Nutzfahrzeug, mit einer elektrischen Energiespeichervorrichtung (100) nach einem der vorhergehenden Ansprüche.

## Claims

1. Electrical energy storage apparatus (100) for an electrically driveable motor vehicle, in particular a utility vehicle, comprising:
a storage device (80) for electrical energy, which storage device is arranged in a housing (50); and
a crash structure (10) which is arranged in a region between an inner surface (52A) of a housing side wall (52) and the storage device (80),
wherein a side (12) of the crash structure (10) that faces the housing side wall (52) has, at least in sections, an outer contour which is designed so as to match the shape of an uneven contour of the housing side wall (52), and
wherein the crash structure (10) is connected to the housing (50), preferably to the housing side wall (52), by means of a releasable connection which is preferably arranged so as to be accessible in an assembled state of the electrical energy storage apparatus (100).

2. Electrical energy storage apparatus (100) according to claim 1, wherein the crash structure (10) spans a, preferably substantially planar, supporting surface (14), which faces the storage device (80), for supporting the storage device (80).

3. Electrical energy storage apparatus (100) according to claim 2, wherein the storage device (80) comprises an electrical storage module (82) composed of a plurality of storage cells (84) arranged in a stacked manner, and a side surface (82A) of the electrical storage module (82), which side surface extends in the stacking direction of the storage cells (84), bears against the supporting surface (14).

4. Electrical energy storage apparatus (100) according to claim 3, wherein only some of the storage cells (84) are supported on the supporting surface (14) and/or a central region of the side surface (82A) of the electrical storage module (82) bears against the supporting surface (14).

5. Electrical energy storage apparatus (100) according to one of the preceding claims, wherein the crash structure (10) has one or more holders (32, 34, 36, 38) for electrical connections (40, 42, 44, 46), preferably a holder for an electrical plug, a cable guide and/or a cable bushing.

6. Electrical energy storage apparatus (100) according to claim 5, wherein a contactor box (60) is arranged on an outer surface (52B) of the housing side wall (52) and at least one electrical connection (40, 42, 44, 46) between the storage device (80) and the contactor box (60) is held on the crash structure (10) and is guided through the housing side wall (52), preferably wherein the at least one electrical connection (40, 42, 44, 46) comprises an electrical plug (44) which, for plug connection to the contactor box (60), is held on the side (12) of the crash structure (10) that faces the housing side wall (52).

7. Electrical energy storage apparatus (100) according to one of the preceding claims, wherein the crash structure (10) has, at least in sections, a fin structure (20) with fins which form chambers (22) which are open to one side of the crash structure (10).

8. Electrical energy storage apparatus (100) according to one of the preceding claims, wherein the crash structure (10) comprises a plastically deformable and/or electrically nonconductive material, preferably a, particularly preferably carbon fibre-reinforced and/or glass fibre-reinforced, plastic, and/or is an injection-moulded element.

9. Electrical energy storage apparatus (100) according to one of the preceding claims, wherein the crash structure (10) has at least one protruding supporting element (16) which is in the form of a sleeve and through which a screw (24) of the releasable connection, which screw is inserted into the crash structure (10), preferably in a captive and/or recessed manner, is guided through said supporting element and screwed into a screw boss (86) which is formed in the housing (50).

10. Electrical energy storage apparatus (100) according to claim 9, wherein the releasable connection comprises at least one clamping connection (18) which is preferably formed on the same and/or on an opposite side of the crash structure (10) as the at least one supporting element (16).

11. Electrical energy storage apparatus (100) according to one of the preceding claims, wherein, in a non-crash case, the crash structure (10) bears against the housing (50) only by way of a section (12A) which is formed with a matching shape, by way of the at least one supporting element (16) and/or by way of the releasable connection.

12. Electrical energy storage apparatus (100) according to one of the preceding claims, wherein the crash structure (10) comprises an elastic shell, preferably an air cushion.

13. Electrical energy storage apparatus (100) according to one of the preceding claims, further comprising a second crash structure (10') which is arranged in a region between an inner surface (52A') of a second housing side wall (52'), which inner surface is situated opposite the inner surface (52A) of the housing side wall (52), and the storage device (80), and which has the features of the crash structure (10) according to one of the preceding claims, preferably wherein the storage device (80) is clamped between the crash structure (10) and the second crash structure (10').

14. Electrical energy storage apparatus (100) according to claim 13, wherein the storage device (80) comprises a plurality of electrical storage modules (82, 82', 82") which are arranged next to one another and have a first electrical storage module (82), which is supported on the crash structure (10), and a second electrical storage module (82'), which is supported on the second crash structure (10').

15. Electrically driveable motor vehicle, in particular a utility vehicle, having an electrical energy storage apparatus (100) according to one of the preceding claims.

## Revendications

1. Dispositif de stockage d'énergie électrique (100) pour un véhicule automobile à propulsion électrique, notamment un véhicule utilitaire, comprenant :
un accumulateur (80) d'énergie électrique, qui est disposé dans un boîtier (50) ; et
une structure d'absorption de chocs (10) disposée dans une zone entre une surface intérieure (52A) d'une paroi latérale de boîtier (52) et l'accumulateur (80),
un côté (12) de la structure d'absorption de chocs (10) qui fait face à la paroi latérale de boîtier (52) présentant un contour extérieur dont la forme est adaptée, au moins par portions, à un contour irrégulier de la paroi latérale de boîtier (52), et
la structure d'absorption de chocs (10) étant reliée au boîtier (50), de préférence à la paroi latérale de boîtier (52), au moyen d'une liaison amovible qui est de préférence disposée de manière accessible à l'état monté du dispositif de stockage d'énergie électrique (100).

2. Dispositif de stockage d'énergie électrique (100) selon la revendication 1, la structure d'absorption de chocs (10) couvrant une surface d'appui (14), de préférence sensiblement plane, faisant face à l'accumulateur (80) afin de soutenir l'accumulateur (80).

3. Dispositif de stockage d'énergie électrique (100) selon la revendication 2, l'accumulateur (80) comprenant un module de stockage électrique (82) constitué d'une pluralité de cellules de stockage (84) disposées à la manière d'une pile, et une surface latérale (82A) du module de stockage électrique (82) qui s'étend dans la direction d'empilement des cellules de stockage (84) reposant contre la surface d'appui (14).

4. Dispositif de stockage d'énergie électrique (100) selon la revendication 3, seule une partie des cellules de stockage (84) prenant appui sur la surface d'appui (14) et/ou une zone centrale de la surface latérale (82A) du module de stockage électrique (82) reposant contre la surface d'appui (14).

5. Dispositif de stockage d'énergie électrique (100) selon l'une des revendications précédentes, la structure d'absorption de chocs (10) possédant un ou plusieurs éléments de maintien (32, 34, 36, 38) pour des connexions électriques (40, 42, 44, 46), de préférence un élément de maintien pour une fiche électrique, un guide-câble et/ou un passe-câble.

6. Dispositif de stockage d'énergie électrique (100) selon la revendication 5, un coffret de protection (60) étant disposé sur une surface extérieure (52B) de la paroi latérale de boîtier (52) et au moins une connexion électrique (40, 42, 44, 46) entre l'accumulateur (80) et le coffret de protection (60) étant maintenue au niveau de la structure d'absorption de chocs (10) et passant à travers la paroi latérale de boîtier (52), l'au moins une connexion électrique (40, 42, 44, 46) comprenant de préférence une fiche électrique (44) qui est maintenue sur le côté (12) de la structure d'absorption de chocs (10) qui fait face à la paroi latérale de boîtier (52) en vue d'une connexion par enfichage au coffret de protection (60).

7. Dispositif de stockage d'énergie électrique (100) selon l'une des revendications précédentes, la structure d'absorption de chocs (10) présentant, au moins par portions, une structure à nervures (20) avec des nervures qui forment des chambres (22) ouvertes vers un côté de la structure d'absorption de chocs (10).

8. Dispositif de stockage d'énergie électrique (100) selon l'une des revendications précédentes, la structure d'absorption de chocs (10) comprenant un matériau plastiquement déformable et/ou électriquement non conducteur, de préférence une matière plastique, de manière particulièrement préférée renforcée par des fibres de carbone et/ou renforcée par des fibres de verre, et/ou étant un élément moulé par injection.

9. Dispositif de stockage d'énergie électrique (100) selon l'une des revendications précédentes, la structure d'absorption de chocs (10) possédant au moins un élément d'appui saillant (16) réalisé sous la forme d'une douille, à travers lequel est passée une vis (24) de la liaison amovible, de préférence incorporée de manière imperdable et/ou encastrée dans la structure d'absorption de chocs (10), et est vissée dans une pastille de vissage (86) formé dans le boîtier (50).

10. Dispositif de stockage d'énergie électrique (100) selon la revendication 9, la connexion amovible comprenant au moins une connexion à serrage (18) qui est formée de préférence sur un même côté et/ou un côté opposé de la structure d'absorption de chocs (10) que l'au moins un élément d'appui (16).

11. Dispositif de stockage d'énergie électrique (100) selon l'une des revendications précédentes, structure d'absorption de chocs (10), en l'absence de collision, reposant uniquement contre le boîtier (50) par une portion (12A) réalisée dans une forme adaptée, par l'au moins un élément d'appui (16) et/ou par la connexion amovible.

12. Dispositif de stockage d'énergie électrique (100) selon l'une des revendications précédentes, la structure d'absorption de chocs (10) comprenant une enveloppe élastique, de préférence un coussin d'air.

13. Dispositif de stockage d'énergie électrique (100) selon l'une des revendications précédentes, comprenant en outre une deuxième structure d'absorption de chocs (10') qui est disposée dans une zone entre une surface intérieure (52A') d'une deuxième paroi latérale de boîtier (52'), opposée à la surface intérieure (52A) de la paroi latérale de boîtier (52), et l'accumulateur (80) et qui présente les caractéristiques de la structure d'absorption de chocs (10) selon l'une des revendications précédentes, l'accumulateur (80) étant de préférence serré entre la structure d'absorption de chocs (10) et la deuxième structure d'absorption de chocs (10').

14. Dispositif de stockage d'énergie électrique (100) selon la revendication 13, l'accumulateur (80) comprenant plusieurs modules de stockage électriques (82, 82', 82") disposés les uns à côté des autres, avec un premier module de stockage électrique (82) qui s'appuie sur la structure d'absorption de chocs (10) et un deuxième module de stockage électrique (82') qui s'appuie sur la deuxième structure d'absorption de chocs (10').

15. Véhicule automobile à propulsion électrique, notamment véhicule utilitaire, comprenant un dispositif de stockage d'énergie électrique (100) selon l'une des revendications précédentes.
